# EUROPÄISCHE PATENTANMELDUNG

(11) **EP 1 437 908 A1**
(43) Veröffentlichungstag der Anmeldung: **14.07.2004**
(21) Anmeldenummer: 03000750.4
(22) Anmeldetag: 13.01.2003
(51) Int. Cl.: H04Q 7/38

(54) **Verfahren zur Übertragung von Informationen an eine Gruppe von Funkstationen**

(71) Anmelder: SIEMENS AKTIENGESELLSCHAFT, 80333 München (DE)
(72) Erfinder: Kroth, Norbert, 14471 Postdam (DE); Schneidenharn, Jörg, 13587 Berlin (DE)

(57) **Zusammenfassung**

Die Erfindung betrifft ein Verfahren zur Übertragung von Informationen in einem Funkkommunikationssystem mit Teilnehmerstationen (UE1,UE2,UE3,UE4,UE5) und mindestens einer Einrichtung (RNC) zur Funkzugangskontrolle zwischen mindestens einer Basisstation (NODE B) und Teilnehmerstationen (UE1,UE2,UE3,UE4,UE5) über eine Luftschnittstelle, wobei Nutzinformationen einer Gruppe von Teilnehmerstationen (UE1,UE2,UE3,UE4,UE5) über Funk zur Verfügung gestellt werden, und wobei die Teilnehmerstationen (UE1,UE2,UE3,UE4,UE5) der Gruppe vor der Übertragung der Nutzinformation benachrichtigt werden. Erfindungsgemäß hängt die Art der Benachrichtigung von mindestens einer Teilnehmerstation (UE1,UE2,UE3,UE4,UE5) der Gruppe von mindestens einer Eigenschaft dieser Teilnehmerstation (UE1,UE2,UE3,UE4,UE5) ab. Weiterhin betrifft die Erfindung eine Einrichtung (RNC) zur Funkzugangskontrolle zur Durchführung des Verfahrens. Vorteile des Verfahrens liegen u.a. in einer Reduzierung des Signalisierungsaufwandes bei Multicast-Diensten.

## Beschreibung

Die Erfindung betrifft ein Verfahren zur Übertragung von Informationen in einem Funkkommunikationssystem nach dem Oberbegriff des Anspruchs 1.

Die Erfindung betrifft ferner eine Einrichtung zur Funkzugangskontrolle zwischen mindestens einer Basisstation und Teilnehmerstationen über eine Luftschnittstelle in einem Funkkommunikationssystem nach dem Oberbegriff des Anspruchs 6.

In Funkkommunikationssystemen werden Informationen (beispielsweise Sprache, Bildinformation, Videoinformation, SMS [Short Message Service] oder andere Daten) mit Hilfe von elektromagnetischen Wellen über eine Funkschnittstelle zwischen sendender und empfangender Station (Basisstation bzw. Teilnehmerstation) übertragen. Das Abstrahlen der elektromagnetischen Wellen erfolgt dabei mit Trägerfrequenzen, die in dem für das jeweilige System vorgesehenen Frequenzband liegen.

Für das eingeführte GSM-Mobilfunksystem (Global System for Mobile Communication) werden Frequenzen bei 900, 1800 und 1900 MHz genutzt. Diese Systeme übermitteln im wesentlichen Sprache, Telefax und Kurzmitteilungen (SMS), sowie digitale Daten.

Für zukünftige Mobilfunksysteme mit CDMA- oder TD/CDMA-Übertragungsverfahren, wie beispielsweise UMTS (Universal Mobile Telecommunication System) oder andere Systeme der dritten Generation, sind Frequenzen im Frequenzband von ca. 2000 MHz vorgesehen. Diese Systeme der dritten Generation werden entwickelt mit den Zielen weltweiter Funkabdeckung, einem großen Angebot an Diensten zur Datenübertragung und vor allem einer flexiblen Verwaltung der Kapazität der Funkschnittstelle, die bei Funk-Kommunikationssystemen die Schnittstelle mit den geringsten Ressourcen ist. Bei diesen Funkkommunikationssystemen soll es vor allem durch die flexible Verwaltung der Luftschnittstelle möglich sein, dass eine Teilnehmerstation bei Bedarf eine große Datenmenge mit hoher Datengeschwindigkeit senden und/oder empfangen kann.

Der Zugriff von Stationen auf die gemeinsamen Funkressourcen des Übertragungsmedium, wie zum Beispiel Zeit, Frequenz, Leistung oder Raum, wird bei diesen Funkkommunikationssystemen durch Vielfachzugriffsverfahren (Multiple Access, MA) geregelt.

Die Verbindung zwischen einer Basisstation und einer Teilnehmerstation erfolgt über eine Luftschnittstelle. Die Basisstation kann dabei mehrere Funkzellen bedienen.

Üblicherweise sind mindestens eine Basisstation und eine Einrichtung zur Funkzugangskontrolle (RNC, Radio Network Controler) Bestandteile eines Basisstationssubsystems (RNS, Radio Network Subsystem). Ein Funkkommunikationssystem umfasst in der Regel mehrere Basisstationssubsysteme, die an ein Kernnetz (CN, Core Network) angeschlossen sind. Dabei ist die Einrichtung zur Funkzugangskontrolle des Basisstationssubsystems mit einer Zugangseinrichtung des Kernnetzes verbunden.

Für die Adressierung von Teilnehmerstationen in Funkkommunikationssystemen sind verschiedene Verfahren bekannt. Neben dem Einzelsenderuf (Unicast), bei dem genau eine Teilnehmerstation adressiert wird, ist der Rundsenderuf (Broadcast), bei dem alle Teilnehmerstationen in Funkreichweite der sendenden Basisstation adressiert werden, am häufigsten vertreten. Weiterhin ist der Gruppensenderuf (Multicast) bekannt, bei dem die Teilnehmerstationen einer Multicast-Gruppe gleichzeitig mit dem Aussenden einer Multicast-Information adressiert werden. Ein Multicast, bei dem alle Funkstationen in der Reichweite einer Basisstation adressiert werden, entspricht einem Broadcast.

Neben individuellen Nutzinformationen werden in Funkkommunikationssystemen somit Daten übertragen, die mehreren Benutzern zur Verfügung gestellt werden. Beispielsweise umfassen solche Nutzinformationen Video streams oder andere Broadcastund/oder Multicast-Informationen. Die Dienste zur Übertragung von Nutzinformationen, welche nicht nur individuell für einen einzigen Teilnehmer vorgesehen sind, sondern mehreren Teilnehmern zur Verfügung gestellt werden, werden unter dem Begriff MBMS (Multimedia Broadcast/Multicast Service) zusammengefasst. Unterschiedliche MBMS-Dienste (Multimedia Broadcast/Multicast Service) werden vom Kernnetz in der Regel als separarte Datenströme bereitgestellt.

Bevor die Nutzinformationen als Dienst einer Gruppe von Teilnehmern zur Verfügung gestellt werden, erfolgt eine Benachrichtigung der Teilnehmerstationen dieser Teilnehmer, welche den Dienst nutzen wollen. Diese Benachrichtigung der Teilnehmerstationen ist notwendig, damit die Empfänger konfiguriert werden können. Je nachdem, in welchem Modus sich die Teilnehmerstationen befinden (z.B. "connected mode", Verbindungsmodus oder "idle mode", Leerlaufmodus), erfolgt die Benachrichtigung. Üblicherweise werden zur Benachrichtigung gruppenspezifische Mechanismen angewendet, bei denen mehrere Teilnehmerstationen gleichzeitig angesprochen werden.

Der Erfindung liegt die Aufgabe zugrunde, ein Verfahren der eingangs genannten Art aufzuzeigen, welches zur effizienten Gestaltung der Benachrichtigung von Teilnehmerstationen einer Gruppe beiträgt. Weiterhin soll eine Einrichtung zur Funkzugangskontrolle der eingangs genannten Art aufgezeigt werden, welche eine solche effektive Benachrichtigung von Teilnehmerstationen einer Gruppe ermöglicht.

Diese Aufgabe wird für das Verfahren durch ein Verfahren mit den Merkmalen des Anspruchs 1 und für die Einrichtung zur Funkzugangskontrolle durch eine Einrichtung mit den Merkmalen des Anspruchs 6 gelöst.

Vorteilhafte Ausgestaltungen und Weiterbildungen sind Gegenstand der abhängigen Ansprüche.

Das Funkkommunikationssystem umfasst Teilnehmerstationen und mindestens eine Einrichtung zur Funkzugangskontrolle zwischen mindestens einer Basisstation und Teilnehmerstationen. Bevor Nutzinformationen einer Gruppe von Teilnehmerstationen über Funk zur Verfügung gestellt werden, werden diese Teilnehmerstationen benachrichtigt. Erfindungsgemäß hängt die Art der Benachrichtigung von mindestens einer Teilnehmerstation der Gruppe von mindestens einer Eigenschaft dieser Teilnehmerstation ab.

Eine Gruppe besteht hierbei aus mindestens einer Teilnehmerstation, in der Regel jedoch aus einer Mehr- bzw. Vielzahl von Teilnehmerstationen. Die maximale Anzahl an Teilnehmerstationen innerhalb der Gruppe entspricht der Anzahl der Teilnehmerstationen des Funkkommunikationssystems. Das Funkkommunikationssystem kann also Teilnehmerstationen der Gruppe und weitere Teilnehmerstationen, welche z.B. anderen Gruppen angehören können, umfassen, oder auch ausschließlich solche Teilnehmerstationen, welche der Gruppe angehören.

Bei einer Eigenschaft der Teilnehmerstation kann es sich um eine -z.B. ab dem Werk vorhandene- Eigenschaft handeln, welche ohne mechanischen Eingriff in die Hardware des Gerätes nicht veränderbar ist, wie z.B. die Anzahl oder den Aufbau von Sende- und Empfangseinheiten. Weiterhin kann es sich um eine z.B. vom Betreiber oder von dem Teilnehmer programmierbare Eigenschaft handeln. Schließlich kann auch eine Kombination von Eigenschaften für die Art der Benachrichtigung relevant sein.

Die Abhängigkeit der Art der Benachrichtigung von mindestens einer Eigenschaft der Teilnehmerstation betrifft mindestens eine Teilnehmerstation der Gruppe. Sie kann jede Anzahl von Gruppenmitgliedern bis hin zur Gesamtzahl der Teilnehmerstationen der Gruppe betreffen. Es ist auch möglich, dass die Teilnehmerstationen, welche einer solchen Abhängigkeit hinsichtlich der Benachrichtigung unterliegen, durch eine Bedingung oder einen gemeinsamen Parameter, wie z.B. eine regionale Beschränkung oder einen Vertrag mit dem Betreiber des Funkkommunikationssystems oder einen Betriebsmodus, bestimmt sind.

In einer Weiterbildung der Erfindung handelt es ich bei der Art der Benachrichtigung um eine gruppenspezifische oder um eine teilnehmerspezifische Benachrichtigung. Während eine gruppenspezifische Benachrichtigung zum Empfang und zur Verarbeitung innerhalb einer Gruppe von Teilnehmerstationen bestimmt ist, besteht der Adressat einer teilnehmerspezifischen Benachrichtigung aus einem individuellen Teilnehmer. Beiden Arten der Benachrichtigung können die Teilnehmerstationen z.B. mittels einer Service-Identifikationsnummer entnehmen, für welchen Dienst diese Benachrichtigung Gültigkeit hat. Es ist möglich, dass verschiedene Arten von Benachrichtigungen an verschiedene Teilnehmerstationen gesendet werden.

Vorteilhafterweise handelt es sich bei der mindestens einen Eigenschaft der Teilnehmerstation um eine andauernde oder zeitweise Fähigkeit zum Empfang und gegebenenfalls zur Verarbeitung einer gruppenspezifischen Benachrichtigung. Diese Fähigkeit betrifft somit den Aufbau der gesamten Empfangseinrichtung der Teilnehmerstation. Bei einer zeitweisen Fähigkeit zum Empfang handelt es sich um eine Empfangsfähigkeit, die durch Umstände wie z.B. die aktuelle Betriebsweise gestört oder vernichtet werden kann. Die Eigenschaft einer Teilnehmerstation kann sich für verschiedene Teilnehmerstationen verschieden auf die Art der Benachrichtigung auswirken.

Gemäß einer Ausgestaltung der Erfindung trifft die mindestens eine Einrichtung zur Funkzugangskontrolle eine Entscheidung über die Art der Benachrichtigung.

Vorzugsweise liegt Identifikationsinformation und lokale Information der mindestens einen Teilnehmerstation, über die Art, diese zu benachrichtigen, die mindestens eine Einrichtung zur Funkzugangskontrolle entscheidet, der mindestens einen Einrichtung zur Funkzugangskontrolle vor. Lokale Information bezieht sich z.B. auf die Funkzelle, in welcher sich die Teilnehmerstation aktuell befindet. Bezüglich der Identifikationsinformation ist z.B. im UMTS die U-RNTI (Utra Radio Network Temporary Identifier) einer Teilnehmerstation als eindeutige Identifikationsinformation der Einrichtung zur Funkzugangskontrolle bekannt, wenn sich die Teilnehmerstation im Verbindungsmodus befindet.

Die erfindungsgemäße Einrichtung zur Funkzugangskontrolle weist Mittel zur Entscheidung über die Art der Benachrichtigung von mindestens einer Teilnehmerstation der Gruppe aufgrund von mindestens einer Eigenschaft dieser Teilnehmerstation auf.

Geeignete Mittel und Vorrichtungen zur Durchführung der Verfahrensschritte können in der Einrichtung zur Funkzugangskontrolle vorgesehen sein.

Die Erfindung wird im folgenden anhand eines Ausführungsbeispiels erläutert. Dabei zeigen
- Figur 1:: einen Ausschnitt aus einem Funkkommunikationssystem,
- Figur 2:: ein Ablaufdiagramm eines erfindungsgemäßen Verfahrens.

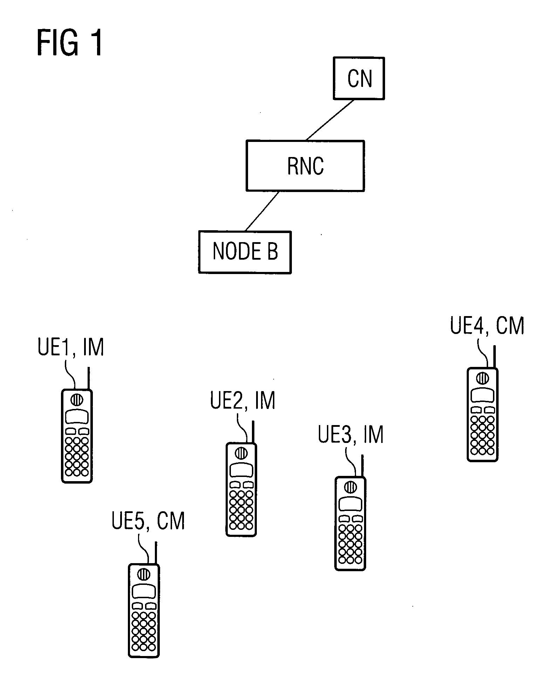

Das Ausführungsbeispiel bezieht sich auf ein Funkkommunikationssystem nach dem UMTS Standard. Figur 1 zeigt einen Ausschnitt aus einem solchen Funkkommunikationssystem der dritten Generation. Dieses umfasst eine Einrichtung RNC zur Funkzugangskontrolle, welche mit einer Basisstation NODE B und einem Kernnetz CN verbunden ist. Die Aufgabe der Einrichtung RNC zur Funkzugangskontrolle besteht in der Steuerung und Überwachung der ihr angeschlossenen Basisstationen mit ihren jeweiligen Funkzellen. Die Basisstation NODE B bedient eine solche Funkzelle, in der sich die Teilnehmerstationen UE1, UE2, UE3, UE4 und UE5 befinden. Die Teilnehmer zu den jeweiligen Teilnehmerstationen UE1, UE2, UE3, UE4 und UE5 wurden für einen Multicast-Dienst subskribiert. Somit bilden die Teilnehmerstationen UE1, U2, UE3, UE4 und UE5 eine Gruppe. Weitere Teilnehmerstationen (in Figur 1 nicht gezeigt) außerhalb der durch die Subskription der Teilnehmer definierten Gruppe können sich in der Funkzelle der Basisstation aufhalten, welche für die Erläuterung des erfindungsgemäßen Verfahrens jedoch nicht bedeutsam sind.

Es werden von der Basisstation NODE B Nutzinformationen wie z.B. Börseninformationen oder Videos gesendet, welche die Teilnehmerstationen UE1, UE2, UE3, UE4 und UE5 der Gruppe empfangen und entschlüsseln können. Teilnehmerstationen außer den Teilnehmerstationen UE1, UE2, UE3, UE4 und UE5 der Gruppe können diese Multicast-Informationen nicht entschlüsseln. Um die Teilnehmerstationen UE1, UE2, UE3, UE4 und UE5 der Multicast-Gruppe konfigurieren zu können, ist es notwendig, diese vor der Übertragung der Nutzinformation zu benachrichtigen.

Nach dem Einschalten einer Teilnehmerstation in dem Funkkommunikationssystem befindet sich diese in einem Leerlaufmodus (Idle Mode). Dieser Modus zeichnet sich dadurch aus, dass diese Teilnehmerstation zwar in dem Kernnetz CN, nicht aber in dem Funkzugangsnetz (Radio Access Network, RAN) des Funkkommunikationssystems durch eine Identifikationsinformation bekannt ist. Einer Einrichtung RNC zur Funkzugangskontrolle bleibt es somit verborgen, welche Teilnehmerstationen im Leerlaufmodus sich in den Funkzellen der ihr angeschlossenen Basisstationen befinden. Eine Teilnehmerstation im Leerlaufmodus tauscht mit dem Funknetz keine Informationen aus, bis eine Verbindungsanfrage durch die Teilnehmerstation gestellt wird. Nach einer solchen Verbindungsanfrage wechselt die Teilnehmerstation in den Verbindungsmodus. Eine Verbindungsanfrage kann z.B. durch die Nachfrage der Teilnehmerstation nach einem Dienst oder auch durch eine Paging-Anfrage des Funknetzes initiiert werden.

Die Teilnehmerstationen des Funkkommunikationssystems, welche sich in einem Verbindungsmodus befinden, sind der jeweiligen Einrichtung zur Funkzugangskontrolle aufgrund einer Identifikationsinformation bekannt und somit lokalisierbar. Die entsprechende Identifikationsinformation wurde der Einrichtung zur Funkzugangskontrolle von der Teilnehmerstation übermittelt. Auch das Kernnetz kann der Einrichtung zur Funkzugangskontrolle Informationen über die jeweilige Teilnehmerstation übermitteln. Während der Verbindungsmodus aktiv ist, überwachen die jeweiligen Teilnehmerstationen andere Funkkanäle als die Teilnehmerstationen, welche sich aktuell im Leerlaufmodus befinden. Eine Teilnehmerstation kann sich auch dann in einem Verbindungsmodus befinden, wenn dieser aktuell kein physikalischer Kanal zugewiesen ist.

Im betrachteten Beispiel der Figur 1 befinden sich die Teilnehmerstationen UE1, UE2 und UE3 im Leerlaufmodus IM, wogegen sich die Teilnehmerstationen UE4 und UE5 im Verbindungsmodus CM befinden. Somit sind der Einrichtung RNC zur Funkzugangskontrolle die Teilnehmerstationen UE4 und UE5 bekannt, während sie keine Kenntnis über den Aufenthalt der Teilnehmerstationen UE1, UE2 und UE3 innerhalb des Versorgungsbereichs der Basisstation NODE B hat.

Die Benachrichtigung der Teilnehmerstationen UE1, UE2 und UE3 im Leerlaufmodus IM über eine zu erwartende Multicast-Information erfolgt über einen Paging-Kanal, welchen diese Teilnehmerstationen UE1, UE2 und UE3 im Leerlaufmodus IM beobachten. Bei dieser Benachrichtigung handelt es sich um gruppenspezifische Informationen, welche ausschließlich an die Teilnehmerstationen UE1, UE2, UE3, UE4 und UE5 der Gruppe adressiert sind. Andere Teilnehmerstationen müssen den betreffenden Paging-Kanal nicht beobachten. Durch diese gruppenspezifische Benachrichtigung werden also mehrere Teilnehmerstationen gleichzeitig angesprochen.

Ob auch die Teilnehmerstationen UE4 und UE5 im Verbindungsmodus CM die Informationen des Paging-Kanals empfangen und verarbeiten können, hängt von den Kapazitäten dieser Teilnehmerstationen UE4 und UE5 im Verbindungsmodus CM ab. In der Regel sind einige Teilnehmereinrichtungen, sogenannte einfache Teilnehmereinrichtungen, nicht in der Lage, gleichzeitig dedizierte Kanäle für z.B. Sprachverbindungen und Kanäle für gruppenspezifische Benachrichtigungen zu empfangen. Diese Teilnehmerstationen benötigen eine an sie adressierte, teilnehmerspezifische Benachrichtigung über die zu erwartende Multicast-Information.

Die separate Benachrichtigung von Teilnehmerstationen über eine zu erwartende Multicast-Information steigert insbesondere bei einer großen Anzahl an Gruppenteilnehmern innerhalb einer Funkzelle die Auslastung der jeweiligen Einrichtung zur Funkzugangskontrolle erheblich. Aufgrund dieses unerwünschten Effektes wird einer Teilnehmerstation im Verbindungsmodus nur dann eine separate Benachrichtigung zugeschickt, wenn diese nicht in der Lage ist, den entsprechenden Paging-Kanal auszuwerten. Den "besser ausgestatteten" Teilnehmerstationen, welche im Verbindungsmodus den Paging-Kanal beobachten können, wird eine derartige separate teilnehmerspezifische Benachrichtigung nicht gesendet.

Das erfindungsgemäße Vorgehen kann eine effektivere Ausnutzung der knappen Funkressourcen erreichen. Durch die Vermeidung der Versendung von unnötigen separaten Benachrichtigungen und somit durch die Reduzierung des Signalisierungsaufwands kann die Interferenz verringert werden, welches eine Steigerung der Übertragungsqualität innerhalb des Funkkommunikationssystems zur Folge hat.

Der Einrichtung zur Funkzugangskontrolle liegen Informationen über die Kapazität der Teilnehmerstationen im Verbindungsmodus zum Empfang des Paging-Kanals vor. Diese Informationen kann die Einrichtung zur Funkzugangskontrolle von der Teilnehmerstation bei dem Wechsel in den Verbindungsmodus oder auch von dem Kernnetz erhalten haben. Aufgrund dieser Informationen kann die Einrichtung zur Funkzugangskontrolle entscheiden, auf welche Art die Teilnehmerstationen im Verbindungsmodus über die Multicast-Informationen zu benachrichtigen sind.

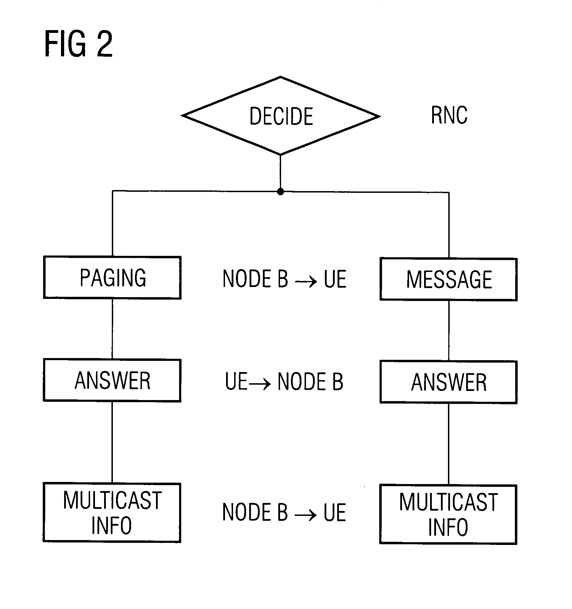

Figur 2 zeigt den Ablauf dieses Verfahrens. In einem Entscheidungsschritt DECIDE entscheidet die Einrichtung RNC zur Funkzugangskontrolle, welche Benachrichtigung eine jede Teilnehmerstation im Verbindungsmodus innerhalb der Funkzellen der ihr zugeordneten Basisstationen erfahren soll. Zur Auswahl steht hierbei die gruppenspezifische Benachrichtigung mittels des Paging-Kanals oder eine teilnehmerspezifische Benachrichtigung z.B. auf einem dedizierten Kanal oder auf einem anderen Kanal, welchen die jeweilige Teilnehmerstation im Verbindungsmodus beobachtet. Der linke Ast der Figur 2 beschreibt das Vorgehen im Bezug auf Teilnehmerstationen im Leerlaufmodus und auf diejenigen Teilnehmerstationen im Verbindungsmodus, welche in diesem Modus den Paging-Kanal beobachten können. Der rechte Ast der Figur 2 hingegen betrifft diejenigen Teilnehmerstationen im Verbindungsmodus, welche in diesem Modus den Paging-Kanal nicht beobachten können.

Ist eine Teilnehmerstation in der Lage, im Verbindungsmodus den Paging-Kanal auszuwerten, so entnimmt diese -wie auch die Teilnehmerstationen im Leerlaufmodus- dem Signal PAGING des Paging-Kanals die relevanten Informationen über den Multicast-Dienst. Die Teilnehmerstationen, welche die Paging-Nachricht empfangen haben, antworten mit einem Signal ANSWER an die jeweilige Basisstation NODE B. Dieser Antwort kann die Einrichtung zur Funkzugangskontrolle entnehmen, ob Bedarf zur Aussendung der Multicast-Informationen in den betreffenden Funkzellen herrscht. Es ist auch möglich, dass die Teilnehmerstationen die Benachrichtigung durch den Paging-Kanal nicht beantworten.

Einer jede Teilnehmerstation im Verbindungsmodus, welche den Paging-Kanal nicht empfangen kann, wird eine teilnehmerspezifische Benachrichtigung MESSAGE zugeschickt. Diese Benachrichtigung MESSAGE enthält die gleichen Informationen wie das Signal PAGING. Nach einer Auswertung der Benachrichtigung kann die Teilnehmerstation eine Antwort ANSWER an die betreffende Basisstation NODE B senden.

Schließlich erfolgt die Versendung der Nutzinformation MULTICAST INFO des Multicast-Dienstes von den Basisstationen NODE B zu den Teilnehmerstationen UE der Gruppe.

Grundsätzlich können für die Entscheidung über die Art der Benachrichtigung auch andere Betriebsmodi als der Verbindungsmodus und der Leerlaufmodus einbezogen werden.

## Patentansprüche

1. Verfahren zur Übertragung von Informationen in einem Funkkommunikationssystem mit Teilnehmerstationen (UE1, UE2, UE3, UE4, UE5) und mindestens einer Einrichtung (RNC) zur Funkzugangskontrolle zwischen mindestens einer Basisstation (NODE B) und Teilnehmerstationen (UE1, UE2, UE3, UE4, UE5) über eine Lüftschnittstelle,
wobei Nutzinformationen (MULTICAST INFO) einer Gruppe von Teilnehmerstationen (UE1, UE2, UE3, UE4, UE5) über Funk zur Verfügung gestellt werden,
wobei die Teilnehmerstationen (UE1, UE2, UE3, UE4, UE5) der Gruppe vor der Übertragung der Nutzinformation (MULTICAST INFO) benachrichtigt werden,
**dadurch gekennzeichnet,**
**dass** die Art der Benachrichtigung von mindestens einer Teilnehmerstation (UE1, UE2, UE3, UE4, UE5) der Gruppe von mindestens einer Eigenschaft dieser Teilnehmerstation (UE1, UE2, UE3, UE4, UE5) abhängt.

2. Verfahren nach Anspruch 1, **dadurch gekennzeichnet,**
**dass** es sich bei der Art der Benachrichtigung um eine gruppenspezifische (PAGING) oder um eine teilnehmerspezifische (MESSAGE) Benachrichtigung handelt.

3. Verfahren nach Anspruch 1 oder 2, **dadurch gekennzeichnet,**
**dass** es sich bei der mindestens einen Eigenschaft der Teilnehmerstation (UE1, UE2, UE3, UE4, UE5) um eine andauernde oder zeitweise Fähigkeit zum Empfang und gegebenenfalls zur Verarbeitung einer gruppenspezifischen Benachrichtigung handelt.

4. Verfahren nach einem der Ansprüche 1 bis 3, **dadurch gekennzeichnet,**
**dass** die mindestens eine Einrichtung (RNC) zur Funkzugangskontrolle eine Entscheidung über die Art der Benachrichtigung trifft.

5. Verfahren nach Anspruch 4, **dadurch gekennzeichnet,**
**dass** Identifikationsinformation und lokale Information der mindestens einen Teilnehmerstation (UE1, UE2, UE3, UE4, UE5) der mindestens einen Einrichtung (RNC) zur Funkzugangskontrolle vorliegt.

6. Einrichtung (RNC) zur Funkzugangskontrolle zwischen mindestens einer Basisstation (NODE B) und Teilnehmerstationen (UE1, UE2, UE3, UE4, UE5) über eine Luftschnittstelle in einem Funkkommunikationssystem,
wobei Nutzinformationen (MULTICAST INFO) einer Gruppe von Teilnehmerstationen (UE1, UE2, UE3, UE4, UE5) über Funk zur Verfügung gestellt werden,
wobei die Teilnehmerstationen (UE1, UE2, UE3, UE4, UE5) der Gruppe vor der Übertragung der Nutzinformation (MULTICAST INFO) benachrichtigt werden,
**dadurch gekennzeichnet,**
**dass** die Einrichtung (RNC) zur Funkzugangskontrolle Mittel zur Entscheidung über die Art der Benachrichtigung von mindestens einer Teilnehmerstation (UE1, UE2, UE3, UE4, UE5) der Gruppe aufgrund von mindestens einer Eigenschaft dieser Teilnehmerstation (UE1, UE2, UE3, UE4, UE5) aufweist.
